Europäisches Patentamt

European Patent Office

Office européen des brevets

(19)

(11) Publication number: **0 168 249**
**A2**

(12) # EUROPEAN PATENT APPLICATION

(21) Application number: **85304937.7**

(22) Date of filing: **10.07.85**

(51) Int. Cl.⁴: **G 02 C 11/02**

(30) Priority: **11.07.84 ZA 845339**

(43) Date of publication of application:
**15.01.86 Bulletin 86/3**

(84) Designated Contracting States:
**AT BE CH DE FR GB IT LI LU NL SE**

(71) Applicant: **SATEX OIL CORPORATION (SOUTH AFRICA)
(PROPRIETARY) LIMITED
18 Nutens Road
Durbanville Cape 7550(ZA)**

(72) Inventor: **Shaw, Gordon Kenneth
2 Lauriston Court 186 Louis Botha Avenue
Houghton Transvaal 2196(ZA)**

(74) Representative: **Brown, John David et al,
FORRESTER & BOEHMERT Widenmayerstrasse 4/I
D-8000 München 22(DE)**

(54) **Article of adornment.**

(57) An article of adornment is in the form of a hollow transparent body having an orifice which provides an inlet and an outlet for coloured material which when introduced into the body gives the body that particular colour.

EP 0 168 249 A2

"Article of Adornment"

THIS INVENTION relates to articles of adornment as for example those worn by humans.

In this specification the term "article of adornment" is used in a wide context and includes within its scope articles used to adorn human beings, animals, trees and structures. Also, particularly included within the scope of the invention, are frames for eyeglasses and the like.

Furthermore, the term "colour" or "coloured" includes white and black.

According to the invention an article of adornment comprises a hollow substantially transparent body having an inlet for the introduction of colouring means into the interior of the body and an outlet for the removal of said colouring means from the interior of the body.

Further, according to the invention, the inlet and outlet are provided for by a single orifice, which includes a closure and the colouring means is a coloured member, a coloured fluid, preferably a liquid, or a finely divided particulate material.

Still further according to the invention, the article of adornment is in the form of a pair of eyeglasses in which each of the eyepiece support frames constitutes a hollow transparent body, the eyepiece support frames being connected by a bridge member, and each having attached hereto an ear engaging side member and each eyepiece support frame having an orifice for the introduction and removal of colouring means.

Still further according to the invention the colouring means is an elongated coloured flexible plastics member with an integral closure.

According to a further aspect of the invention an article of adornment comprises a substantially transparent body including internal colouring means, the colouring means being changeable between at least two colours.

Two embodiments of the invention, described by way of example only, following with reference to the accompanying drawings in which:

FIGURE 1 is a view of a pair of eyeglasses with the coloured members removed.

and

FIGURE 2 is a view of an earring.

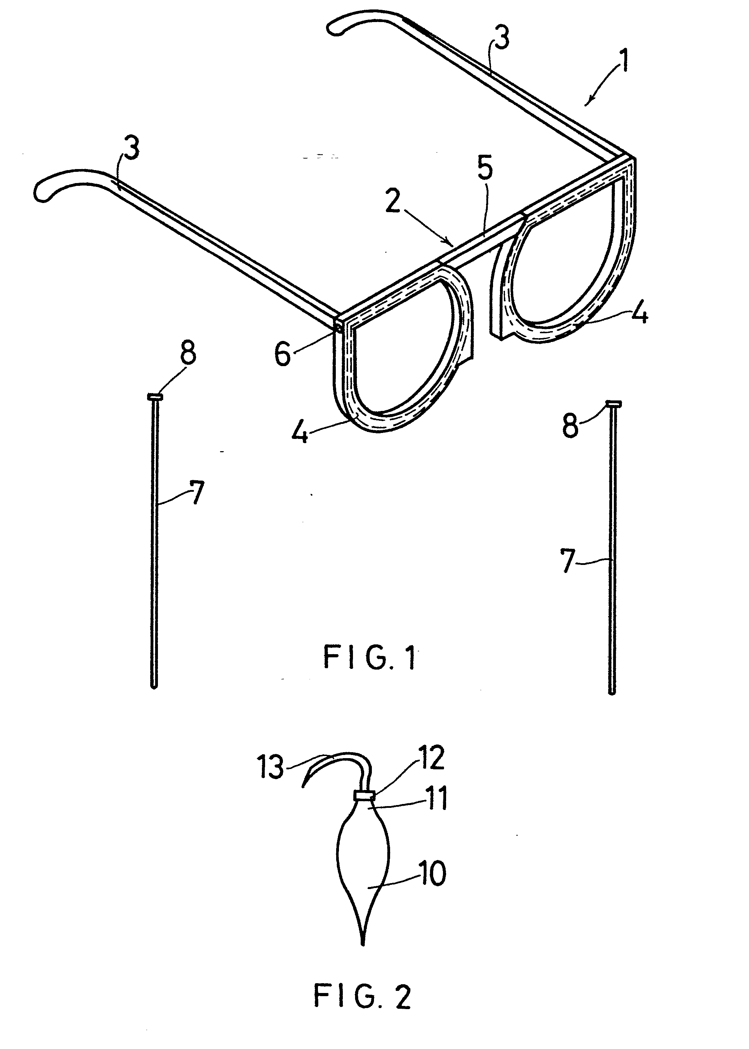

In the first embodiment of the invention as shown in Figure 1, a pair of eyeglasses, generally indicated by the numeral (1), has a plastic frame (2) with normal ear engaging side members (3) hinged thereto.

The plastic frame is made from a transparent plastics material and comprises two eyepiece support frames (4) which are hollow and which are connected by a bridge member (5). Located in each hollow support frame D a small circular aperture (6), the aperture preferably positioned so as to lead directly into the upper part of the hollow frame as shown.

Associated with this embodiment of the invention are two thin, flexible plastic colouring members (7), each member having integral therewith a plug (8) at one end. In use, the colouring members (7) are inserted into each of the hollow eyepiece support frames (4).

/...

The plug (8) on each member seals the aperture (6) and holds the member within the frame.

It will be appreciated that the colouring member will completely fill its associated hollow frame and will give the frame a particular colour.

It will further be appreciated that the hollow frames may be filled with a coloured liquid or a coloured finely divided particulate material. This colouring means is introduced via the apertures (6). This embodiment of the invention requires a closure for each hollow frame, the closures being similar to plugs (8).

Naturally, the colour may be changed by simply removing the colouring means via the aperture (6) and introducing a colouring means having a different colour.

The second embodiment of the invention is shown in Figure 2 and is an earring (10).

The earring (10) has an elongated tapered hollow body made from suitable plastics

The features disclosed in the foregoing description, in the following claims and/or in the accompanying drawings may, both separately and in any combination thereof, be material for realising the invention in diverse forms thereof.

CLAIMS

1.      An article of adornment comprising a hollow substantially transparent body having an inlet for the introduction of colouring means into the interior of the body and an outlet for the removal of said colour means from the interior of the body.

2.      An article of adornment as claimed in claim 1 whereby the inlet and outlet are provided for by a single orifice.

3.      An article of adornment as claimed in either of claims 1 or 2 in which the colouring means is one of a coloured fluid, a coloured member and a coloured, finely divided particulate material.

4.      An article of adornment as claimed in claim 2 which includes a coloured member and the coloured member has an integral closure for the inlet.

8.          An article of adornment comprising a
            substantially transparent body including
            internal colouring means, the colouring
            means being changeable between at least
            two colours.

9.          Any article of adornment which is
            specifically identified in the
            accompanying description with
            particular reference to Figure 1
            and Figure 2.

0168249

FIG. 1

FIG. 2